(19) **Europäisches Patentamt**
**European Patent Office**
**Office européen des brevets**

(11) **EP 1 801 550 B1**

(12) **EUROPÄISCHE PATENTSCHRIFT**

(45) Veröffentlichungstag und Bekanntmachung des Hinweises auf die Patenterteilung:
**13.01.2010  Patentblatt 2010/02**

(51) Int Cl.:
**G01G 9/00** (2006.01)

(21) Anmeldenummer: 06122501.7

(22) Anmeldetag: **18.10.2006**

(54) **Verfahren zur Bestimmung der Beschichtungsmenge auf einer Materialbahn**

Method for determining the coating weight on a web of material

Procédé pour déterminer le poids d'une couche sur une bande de matériau

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.12.2005  DE 102005060811**

(43) Veröffentlichungstag der Anmeldung:
**27.06.2007  Patentblatt 2007/26**

(73) Patentinhaber: **Voith Patent GmbH**
**89522 Heidenheim (DE)**

(72) Erfinder:
• **Ischdonat, Thomas**
  **89429, Bachhagel (DE)**
• **Typpo, Pekka M.**
  **Cupertino, CA 95014 (US)**

(56) Entgegenhaltungen:
**EP-A1- 0 882 945    US-A- 5 338 361**

EP 1 801 550 B1

**Beschreibung**

Die Erfindung betrifft ein Verfahren zur Bestimmung der Menge einer auf eine Materialbahn, insbesondere Faserstoffbahn, aufgebrachten Beschichtung nach dem Oberbegriff des Anspruchs 1. Des weiteren betrifft die Erfindung ein Verfahren zur Regelung der Menge einer auf eine Materialbahn aufgebrachten Beschichtung. Darüber hinaus betrifft die Erfindung eine Vorrichtung zum Auftrag einer Beschichtung auf eine Materialbahn.

Da Güter in der Regel nur mit ihrer Oberfläche mit der Umwelt in Wechselwirkung treten, werden Gegenstände, wie u.a. Folien oder Papiere, heutzutage oftmals beschichtet.

Papiere werden hierbei bspw. in einem Streichprozess veredelt um deren Funktionalität zu beeinflussen. Beispielhaft sind in diesem Zusammenhang Thermopapiere und Durchschreibepapier zu nennen. Aber auch um die Bedruckbarkeit von Papier zu verbessern, werden immer mehr Papiere gestrichen. So werden bspw. Papiere für den Zeitungs- und Magazindruck in einem Streichprozess beschichtet, wodurch für den Massendruck geeignete bspw. als LWC-Papier bezeichnete Papiere erhalten werden.

Die aufgebrachte Beschichtungsmenge ist hierbei ausschlaggebend für die Qualität solcher Papiere, weshalb bspw. eine bestimmte Beschichtungsmenge auf dem Papier nicht unterschritten werden darf. Des weiteren ist es aber zur kostengünstigen und damit wirtschaftlichen Produktion solcher Papiere unerlässlich, dass die Beschichtungsmenge gewisse Höchstgrenzen nicht überschreitet.

Im Stand der Technik kommen heute verschiedene Techniken zur Bestimmung der Beschichtungsmenge, auch Strichgewicht genannt, zum Einsatz.

So kann bspw. das Strichgewicht durch die Differenz des Flächengewichts vor und nach dem Beschichtungsprozess bestimmt werden.

Mit dem genannten Verfahren kann aber nur das Gesamtstrichgewicht, d.h. die Summe des Strichgewichts, das sich aus der Beschichtung der Ober- und der Unterseite ergibt, bestimmt werden. Dies ist insbesondere dann von Nachteil wenn die Beschichtung gleichzeitig auf beiden Seiten aufgebracht wird. Wird die Beschichtung zuerst auf der einen Seite der Bahn und darauf folgend auf der anderen Seite der Bahn aufgebracht, so muss nach jedem Auftragsvorgang das Strichgewicht gemessen werden, was zwei Messvorrichtungen erfordert.

Des weiteren sind noch spektroskopische Verfahren zu nennen, bei denen ein Referenzsignal und ein Messsignal einer Leitkomponente spektral miteinander verglichen werden, wobei der zugrunde liegende physikalische Ansatz dem Lambert-Beer'schen Gesetz folgt. Als Leitkomponente wird bspw. Kaolin, Latex oder $CaCO_3$ verwendet. Mit den spektroskopischen Verfahren kann in der Regel das Strichgewicht für jede Seite separat bestimmt werden.

Ein solches Verfahren wird bspw. in der EP 0 882 945 beschrieben.

Nachteil dieser Verfahren ist, dass zum einen die Konzentration der Leitkomponente ausreichend hoch sein muss und zum anderen das Lambert-Beer'sche Gesetz von einer homogenen und nicht streuenden Probe ausgeht. Da in Realität aber in der zu messenden Probe streuende Partikel vorhanden sind, ist die Genauigkeit dieses Verfahrens oftmals unzufrieden stellend.

Verfahren, welche die o.g. Nachteile zu umgehen versuchen, setzen auf hoch auflösende Laserspektrometrie. Die letzt genannten Verfahren sind aber aufwändig und kostenintensiv. Des weiteren sind hoch auflösende Laserspektrometer empfindlich und für den Einsatz unter widrigen Bedingungen, wie diese im Bereich der Papiermaschine vorherrschen, ungeeignet.

Es ist die Aufgabe der vorliegenden Erfindung, ein Verfahren der eingangs genannten Art vorzuschlagen, bei dem die beschriebenen Nachteile nicht mehr auftreten.

Die Aufgabe wird erfindungsgemäß durch die Merkmale des Patentanspruchs 1 gelöst.

Erfindungsgemäß wird ein Verfahren zur Bestimmung der Menge einer auf eine Materialbahn, insbesondere Faserstoffbahn, aufgebrachten Beschichtung vorgeschlagen, bei dem Strahlung auf die mit der Beschichtung versehene Materialbahn gerichtet wird und bei dem die Strahlung zumindest mit der Beschichtung wechselwirkt. Bei dem Verfahren wird des weiteren zumindest ein Anteil der zumindest mit der Beschichtung wechselgewirkten Strahlung detektiert, um auf Basis zumindest eines durch die detektierte Strahlung erzeugten Messsignals, die Menge der Beschichtung auf und gegebenenfalls in der Materialbahn zu bestimmen.

Das erfindungsgemäße Verfahren ist dadurch gekennzeichnet, dass die Strahlung nach deren Wechselwirkung in verschiedenen Frequenzbändern detektiert wird, zur Erzeugung eines für jedes Frequenzband spezifischen Messsignals, wobei die Frequenzbänder zumindest eine allen Frequenzbändern gemeinsame Frequenz umfassen und die Frequenzbänder derart gewählt sind, dass bei der gleichen Menge an aufgebrachter Beschichtung zumindest eines der spezifischen Messsignale mehr mit der Struktur der aufgebrachten Beschichtung variiert als ein anderes der spezifischen Messsignale. Das erfindungsgemäße Verfahren ist des weiteren dadurch gekennzeichnet, dass die spezifischen Messsignale der verschiedenen Frequenzbänder zur Bestimmung der Menge der Beschichtung miteinander mathematisch verknüpft werden.

Hierbei ist anzumerken, dass die Erzeugung der verschiedenen Frequenzbänder der Strahlung vor oder nach deren Wechselwirkung mit zumindest der Beschichtung erfolgen kann.

Bei der Wechselwirkung der Strahlung mit der Beschichtung und ggf. der Materialbahn wird der durch die Wechselwirkung erhaltene Strahlungsanteil durch eine Vielzahl von Einflussfaktoren, wie bspw. Absorption oder Streuung erzeugt.

Hierbei wird die Absorption im wesentlichen durch die aufgebrachte Beschichtungsmenge bestimmt, wohingegen die Streuung wesentlich durch die innere Struktur und/oder die Oberflächenstruktur -bspw. aufgrund von Körnung, Korngrenzen, Oberflächenrauhigkeit und der gleichen- beeinflusst wird. Wird nur ein Messsignal generiert, so können diese unterschiedlichen Einflussfaktoren nicht voneinander getrennt werden, so dass es auf Basis des Messsignals nicht möglich ist, das Strichgewicht exakt zu bestimmen.

Das erfindungsgemäße Verfahren beruht nun auf der Idee, dass mehrere Messsignale erzeugt werden, die zumindest eine Frequenz gemeinsam haben und die bei einer gegebenen Beschichtungsmenge unterschiedlich sensitiv bzgl. der Struktur der aufgebrachten Beschichtung sind. Da die unterschiedlichen Einflussfaktoren bei gleicher Beschichtungsmenge eine andere Form des Messsignals und daraus resultierend bspw. unterschiedliche Mittelwerte der verschiedenen spezifischen Messsignale zur Folge haben, kann das Strichgewicht trotz der unterschiedlichen Einflussfaktoren durch eine mathematische Verknüpfung der spezifischen Messsignale der verschiedenen Frequenzbänder exakt bestimmt werden.

Vorteilhafte Ausführungsformen und Weiterbildungen der Erfindung sind in den Unteransprüchen angegeben.

In den heute eingesetzten Beschichtungsmaterialen mit denen Papier beschichtet wird, wird immer mehr $CaCO_3$ eingesetzt. Bei der Wechselwirkung der Strahlung mit der Beschichtung wird die Strahlung bei bestimmten Frequenzen teilweise absorbiert, wobei der Absorptionsgrad ein Maß für die aufgebrachte Beschichtungsmenge ist. Daher wird die gemeinsame Frequenz bevorzugt so gewählt, dass die Strahlung bei Wechselwirkung mit der Beschichtung zumindest teilweise absorbiert wird.

Eine weitere Einflussgröße auf das wechselgewirkte Signal stellt der Streuanteil dar, wobei der Streuanteil des Signals nicht durch die aufgebrachte Beschichtungsmenge sondern durch die Größe und Gestalt der Partikel in der Beschichtung beeinflusst wird.

Die eingestrahlte Strahlung wird somit bei deren Wechselwirkung mit der Beschichtung frequenzabhängig mehr oder weniger stark absorbiert. Des weiteren wird die Strahlung diffus von den Partikeln in der Beschichtung reflektiert.

Das spezifische Messsignal jedes Frequenzbandes ist somit eine Funktion der Absorption und der Streuung der eingestrahlten Strahlung.

Versuche haben gezeigt, dass die Form des Messsignals als Funktion der Frequenz unter anderem durch die Korngröße der streuenden Partikel bestimmt wird. Mit dem erfindungsgemäßen Verfahren ist es somit möglich, die aufgebrachte Beschichtungsmenge eindeutig zu bestimmen, trotz der in den Messsignalen enthaltenen und Streuung bedingenden Strukturinformation.

Da $CaCO_3$ im infraroten Spektralbereich absorbiert wird, sieht eine bevorzugte Ausgestaltung der Erfindung vor, dass die zumindest eine gemeinsame Frequenz im infraroten Spektralbereich, insbesondere bei einer Wellenlänge von ca. $4 \mu m$, liegt.

Das spezifische Messsignal jedes Frequenzbandes kann einen aufgrund der Wechselwirkung reflektierten Anteil der Strahlung umfassen. Die Reflexion ist hierbei im wesentlichen diffus. Alternativ dazu kann das spezifische Messsignal jedes Frequenzbandes einen aufgrund der Wechselwirkung transmittierten Anteil der Strahlung umfassen, wobei die Transmission im wesentlichen diffus ist.

Vorzugsweise umfassen die Frequenzbänder ein allen Frequenzbändern gemeinsames Frequenzband.

Nach einer weiteren besonders bevorzugten Ausgestaltung der Erfindung sind alle Frequenzbänder unterschiedlich groß, wobei das jeweils kleinere Frequenzband vollständig innerhalb der jeweils größeren Frequenzbänder angeordnet ist.

Eine konkrete Ausgestaltung des erfindungsgemäßen Verfahrens sieht hierbei vor, dass das kleinste der Frequenzbänder das gemeinsame Frequenzband ist, wobei insbesondere das kleinste der Frequenzbäder derart gewählt ist, dass dessen spezifisches Messsignal im Verhältnis zu den anderen spezifischen Messsignalen die größte Abhängigkeit von der Struktur der aufgebrachten Beschichtung hat und wobei insbesondere das größte der Frequenzbäder derart gewählt ist, dass dessen spezifisches Signal im Verhältnis zu den anderen spezifischen Messsignalen die kleinste Abhängigkeit von der Struktur der aufgebrachten Beschichtung hat.

In diesem Zusammenhang ist es bspw. denkbar, dass die Frequenzbänder alle eine gemeinsame Mittenfrequenz haben.

Durch Veränderung der Größe der Partikel in der Beschichtung ändert sich nicht nur die Form der bspw. in Reflexion gemessenen spezifischen Messsignale sondern auch die jeweiligen Mittelwerte der Intensität. Eine bevorzugte Ausgestaltung der Erfindung sieht demzufolge vor, dass jedes der spezifischen Messsignale proportional zum Mittelwert der Intensität der wechselgewirkten Strahlung über das jeweilige Frequenzband gebildet ist.

Eine konkrete Möglichkeit der mathematischen Verknüpfung zur Bestimmung der aufgebrachten Beschichtungsmenge M sieht in diesem Zusammenhang bspw. wie folgt aus:

$$[S3 / (S2 - S1)] - 1 \sim M$$

wobei

S3     das zum Mittelwert der Intensität über das kleinste der Frequenzbänder proportionale spezifische Messsignal ist, welches am stärksten mit der Struktur der aufgebrachten Beschichtung variiert,

S1 das zum Mittelwert der Intensität über das größte der Frequenzbänder proportionale spezifische Messsignal ist, welches am wenigsten mit der Struktur der aufgebrachten Beschichtung variiert,

S2 das zum Mittelwert der Intensität über das mittlere der Frequenzbänder proportionale spezifische Messsignal ist, und

wobei

das jeweils kleinere Frequenzband vollständig innerhalb der jeweils größeren Frequenzbänder angeordnet ist und das kleinste der Frequenzbänder das gemeinsame Frequenzband bildet.

Die Frequenzbänder können hierbei bspw. einfach mittels Bandpassfiltern ausgewählt werden.

Nach einem weiteren Aspekt der Erfindung wird ein Verfahren zur Regelung der auf eine Materialbahn aufzubringenden Menge einer Beschichtung mit folgenden Schritten vorgeschlagen:

- Bestimmung der Menge der Beschichtung, welche auf einen Abschnitt der Materialbahn bei einem Auftragsschritt aufgebracht wurde, mit dem vorher beschriebenen Verfahren,

- Vergleich des ermittelten Istwerts der Beschichtungsmenge mit einem Sollwert der Beschichtungsmenge,

- Betätigen zumindest eines Stellglieds auf Basis des Vergleichs zwischen Soll- und Istwert, zur Beeinflussung der Menge der Beschichtung, die auf einen noch nicht mit dem Auftragsschritt beschichteten Abschnitt der Materialbahn aufgebracht wird.

Durch das erfindungsgemäße Verfahren kann somit während der laufenden Produktion die Beschichtungsmenge geregelt werden.

Des weiteren wird eine erfindungsgemäße Vorrichtung zum Aufbringen einer Beschichtung auf eine bewegte Materialbahn vorgeschlagen, die ein Auftragswerk mit mindestens einem Stellglied zur Regulierung der Auftragsmenge und mindestens eine Messvorrichtung umfasst, die geeignet ist das erfindungsgemäße Verfahren durchzuführen, wobei die Messvorrichtung in Bahnlaufrichtung hinter dem Auftragswerk angebracht ist, und einen Computer zur Ermittelung der Differenz zwischen Ist- und Sollwert der Beschichtung und Berechnung der Stellsignale für das Auftragswerk umfasst.

Vorzugsweise sind jeweils eine Messvorrichtung, die geeignet sind das Verfahren zur Bestimmung der Beschichtungsmenge durchzuführen, in Laufrichtung der Materialbahn vor und hinter dem Auftragswerk angebracht, wobei die Vorrichtung einem Computer zur Ermittelung des Differenzsignals der beiden Messvorrichtungen und des daraus resultierenden Ist-Werts für die Beschichtung umfasst.

Des weiteren kann es sinnvoll sein, wenn die Vorrichtung mehrere Auftragswerke umfasst und die Messvorrichtung insbesondere geeignet ist, jeweils die Auftragsmenge auf die Ober- und Unterseite der Materialbahn unabhängig voneinander zu bestimmen.

Nachfolgend wird die Erfindung anhand der folgenden Zeichnungen weiter erläutert. Es zeigen:

Figur 1 verschiedene Transmissionsspektren nach der Wechselwirkung von IR Strahlung mit der Beschichtung einer Papierbahn,

Figur 2 einen Sensor der zur Durchführung des erfindungsgemäßen Verfahrens geeignet ist,

Figur 3 einen Teilabschnitt einer Papiermaschine mit einem Sensor und einem Beschichtungsauftragswerk.

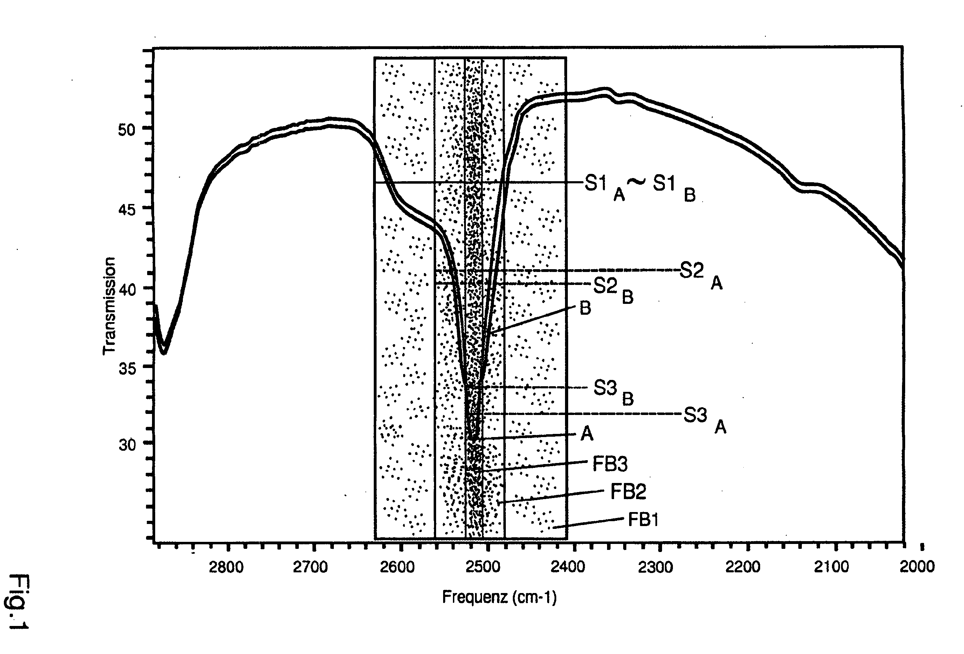

Die Figur 1 zeigt zwei verschiedene Transmissionsspektren, wie diese sich durch die Wechselwirkung von Strahlung im Frequenzbereich zwischen 2000cm-1 und 2900cm-1 mit einer auf eine Papierbahn aufgebrachten Beschichtung ergeben.

Das Spektrum A ergibt sich hierbei bei einer Beschichtung mit Partikel mit einer kleinen Korngröße, wohingegen das Spektrum B bei einer Beschichtung mit größeren Partikel entsteht.

Bei dem erfindungsgemäßen Verfahren wird die wechselgewirkte Strahlung in verschiedenen Frequenzbändern FB1, FB2 und FB3 detektiert, wodurch ein für jedes Frequenzband spezifisches und durch den Mittelwert der Intensität über das jeweilige Frequenzband gebildetes Messsignal S1 für FB1, S2 für FB2 und S3 für FB3 erzeugt wird. Hierbei erstreckt sich FB1 von $2440cm^{-1}$ bis $2600cm^{-1}$, FB2 von $2480cm^{-1}$ bis $2560cm^{-1}$ und FB3 von $2500cm^{-1}$ bis $2520cm^{-1}$, so dass alle Frequenzbänder FB1 bis FB3 einen allen Frequenzbändern gemeinsamen Frequenzabschnitt umfassen, der sich über das Frequenzband FB3 erstreckt.

In die Figur 1 sind die Mittelwerte der Intensität $S1_A$ bis $S3_A$ für das Frequenzspektrum A und die Mittelwerte der Intensität $S1_B$ bis $S3_B$ für das Frequenzspektrum B eingezeichnet. Man erkennt, dass die spezifischen Messsignale $S3_A$, $S3_B$ stark von der Struktur der aufgebrachten Beschichtung abhängig sind, wohingegen die spezifischen Messsignale $S1_A$, $S1_B$ nahezu unabhängig von der Struktur sind.

Durch die erfindungsgemäße mathematische Kombination der spezifischen Messsignale werden auch Schwankungen der Beleuchtungsquelle, welche die Strahlung zur Wechselwirkung mit der Beschichtung aussendet, kompensiert.

Des weiteren sind alle Frequenzbänder FB1 bis FB3 unterschiedlich groß, wobei das jeweils kleinere Frequenzband vollständig innerhalb der jeweils größeren Frequenzbänder angeordnet ist. So ist bspw. das Frequenzband FB3 innerhalb der beiden größeren Frequenzbänder FB1 und FB2 angeordnet, wie das Frequenzband FB2 innerhalb des größeren Frequenzbandes FB1 angeordnet ist, wobei das kleinste Frequenzband FB3 das gemeinsame Frequenzband bildet. Wie aus der Figur 1 zu erkennen ist, haben alle Frequenzbänder eine gemeinsame Mittenfrequenz, die bei ca. 2510cm$^{-1}$ liegt.

Gemäß dem erfindungsgemäßen Verfahren werden die spezifischen Messsignale S1 bis S3 der verschiedenen Frequenzbänder FB1 bis FB3 zur Bestimmung der Menge M der Beschichtung miteinander mathematisch verknüpft, so dass sich die Beschichtungsmenge eindeutig als Funktion der spezifischen Messsignale S1 bis S3 darstellen lässt. Hierbei werden die spezifischen Messsignale jeweils durch den Mittelwert der Intensität der wechselgewirkten Strahlung über das jeweilige Frequenzband gebildet.

Es gilt somit: M= Funktion(S1, S2, S3)

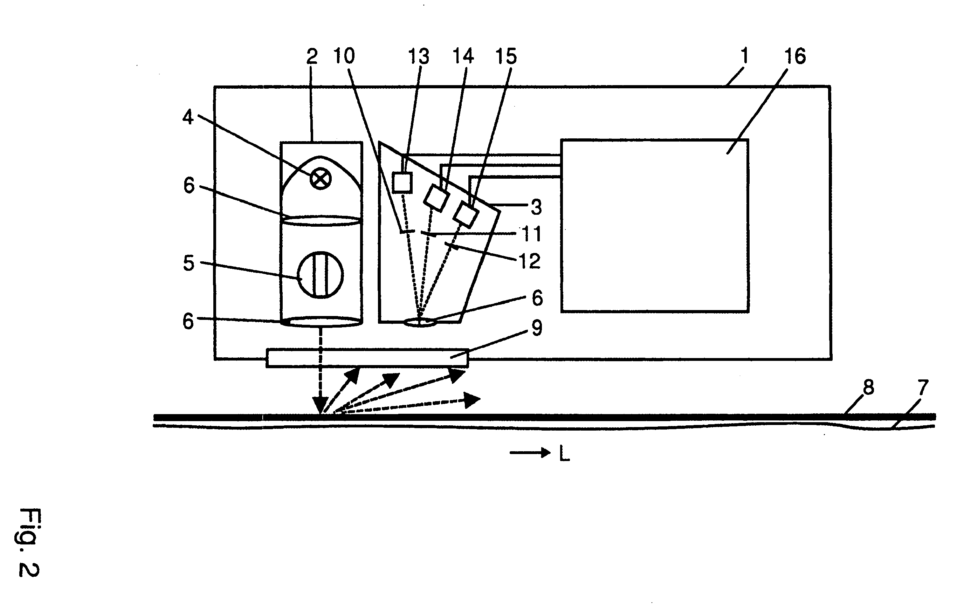

Die Figur 2 zeigt einen Sensor 1 in schematischer Darstellung, mit dem das erfindungsgemäße Verfahren durchgeführt werden kann. Der Sensor 1 umfasst eine Beleuchtungseinheit 2 und eine Detektoreinheit 3.

In der Beleuchtungseinheit 2 ist eine Infrarot-Strahlungsquelle 4 angeordnet, deren ausgesendete Strahlung von einer Choppereinheit 5 gechoppt wird. Des weiteren weist die Beleuchtungseinheit 2 eine Anzahl von Linsen 6 auf, mittels der die Strahlung auf eine in einer Laufrichtung L laufende Papierbahn 7 mit einer Beschichtung 8 gerichtet wird. Der Sensor 1 weist des weiteren ein Fenster 9 auf, durch welches die von der Beleuchtungseinheit 2 auf die Papierbahn 7 gerichtete Strahlung aus dem Sensor 1 austritt und durch welches der mit zumindest der Beschichtung 8 wechselgewirkte Strahlungsanteil in den Sensor 1 eintritt, um in die Detektoreinheit 3 zu gelangen.

Da bei dem dargestellten Sensor 1 die Beleuchtungseinheit 2 und die Detektoreinheit 3 beide auf der gleichen Seite der Papierbahn 7 angeordnet sind, kann mit dem Sensor 1 die Absorption der Strahlung bei Wechselwirkung mit zumindest der Beschichtung 8 in Reflektion gemessen werden, wobei die Reflektion aufgrund von Streuung der Strahlung an Partikeln in der Beschichtung im wesentlichen diffus ist.

Die diffus reflektierte Strahlung tritt durch das Fenster 9 und durch eine oder mehrere Linsen 6 in die Detektoreinheit 3 ein und wird in verschiedene Strahlen zerlegt. Anschließend passieren die verschiedenen Strahlen jeweils unterschiedliche Bandpassfilter 10, 11 und 12.

Die Bandpassfilter 10 bis 12 sind derart ausgelegt, dass die durch diese erzeugten Frequenzbänder einen allen Frequenzbändern gemeinsamen Frequenzbereich umfassen und dass alle Frequenzbänder unterschiedlich groß sind, wobei das jeweils kleinere Frequenzband vollständig innerhalb der jeweils größeren Frequenzbänder angeordnet ist. Des weiteren haben die Frequenzbänder alle eine gemeinsame Mittenfrequenz. Durch die dergestalt ausgelegten Bandpassfilter 10 bis 12 werden bspw. die in der Figur 1 beschriebenen Frequenzbänder FB1 bis FB3 erzeugt.

Durch das Passieren der Strahlung durch die Bandpassfilter 10 bis 12 gelangt die jeweils gefilterte Strahlung zu den jeweiligen Bandpassfiltern 10 bis 12 zugeordnete Detektoren 13 bis 15, in denen für jedes der Frequenzbänder ein spezifisches Messsignal erzeugt wird. Die spezifischen Messsignale werden einer Signalverarbeitungseinheit 16 zugeführt, die zur Ermittlung des Gewichts der aufgebrachten Beschichtung 8 die Messsignale mathematisch miteinander verknüpft.

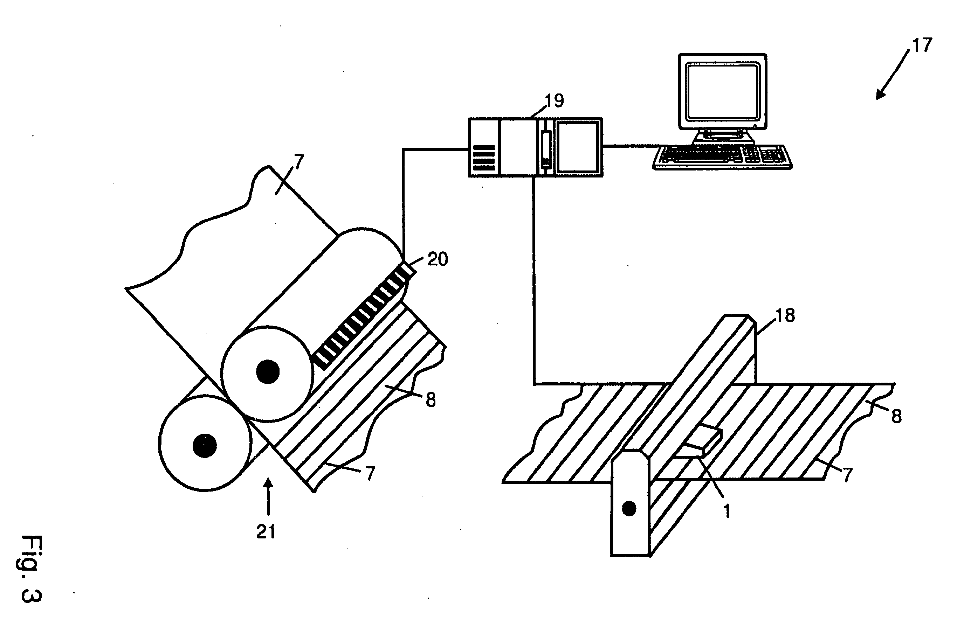

Die Figur 3 zeigt einen Teilabschnitt einer Papiermaschine 17, in der der Sensor 1 zur Bestimmung der Beschichtungsmenge an einer Stelle angeordnet ist, an der die Beschichtung 8 bereits auf die Papierbahn 7 aufgebracht ist. Der Sensor 1 ist auf einem Scanner 18 quer zur Papierbahn 7 traversierbar gelagert, so dass mit dem Sensor 1 kontinuierlich die Menge der aufgebrachten Beschichtung 8 über die Breite der Papierbahn 7 ortsaufgelöst detektiert werden kann.

Vom Sensor 1 wird eine Information über die Auftragsmenge an eine Regelungseinheit 19 ausgegeben, die den bspw. in Querrichtung ortsaufgelöst ermittelten Istwerts der Beschichtungsmenge mit einem Sollwert der Beschichtungsmenge vergleicht. Auf Basis des Vergleichs zwischen Soll- und Istwert steuert die Regelungseinheit 19 ein oder mehrere Stellglieder 20 einer Auftragseinrichtung 21 an, um die Menge der Beschichtung 8 zu beeinflussen, die auf einen noch unbeschichteten Abschnitt der Papierbahn 7 aufgebracht wird.

**Patentansprüche**

1. Verfahren zur Bestimmung der Menge einer auf eine Materialbahn, insbesondere Faserstoffbahn, aufgebrachten Beschichtung, bei dem Strahlung auf die mit der Beschichtung versehene Materialbahn gerichtet wird und die Strahlung zumindest mit der Beschichtung wechselwirkt und bei dem zumindest ein Anteil der zumindest mit der Beschichtung wechselgewirkten Strahlung detektiert wird, um auf Basis eines durch die detektierte Strahlung erzeugten zumindest einen Messsignals die Menge der Beschichtung auf und gegebenenfalls in der Materialbahn zu bestimmen,
   **dadurch gekennzeichnet,**
   **dass** die Strahlung nach deren Wechselwirkung in verschiedenen Frequenzbändern detektiert wird, zur Erzeugung eines für jedes Frequenzband spezifischen Messsignals, wobei die Frequenzbänder zumindest eine allen Frequenzbändern gemeinsame Frequenz umfassen und die Frequenzbänder derart gewählt sind, dass bei der gleichen Menge an aufgebrachter Beschichtung zumindest eines der spezifischen Messsignale mehr mit der Struktur der aufgebrachten Beschichtung variiert als ein anderes der spezifischen Messsignale und dass die spezifischen Messsignale der verschiedenen Frequenzbänder zur Bestimmung der Menge der Beschichtung miteinander mathematisch verknüpft werden.

2. Verfahren nach Anspruch 1,
**dadurch gekennzeichnet,**
**dass** bei der gemeinsamen Frequenz die Strahlung bei Wechselwirkung mit der Beschichtung zumindest teilweise absorbiert wird.

3. Verfahren nach Anspruch 1 oder 2,
**dadurch gekennzeichnet,**
**dass** das spezifische Messsignal jedes Frequenzbands durch einen aufgrund der Wechselwirkung reflektierten Anteil der Strahlung erzeugt wird.

4. Verfahren nach Anspruch 1 oder 2,
**dadurch gekennzeichnet,**
**dass** das spezifische Messsignal jedes Frequenzbands durch einen aufgrund der Wechselwirkung transmittierten Anteil der Strahlung erzeugt wird.

5. Verfahren nach einem der Ansprüche 1 bis 4,
**dadurch gekennzeichnet,**
**dass** die zumindest eine gemeinsame Frequenz im infraroten Spektralbereich, insbesondere bei einer Wellenlänge von ca. 2500cm$^{-1}$, liegt.

6. Verfahren nach einem der Ansprüche 1 bis 5,
**dadurch gekennzeichnet,**
**dass** die Frequenzbänder ein allen Frequenzbändern gemeinsames Frequenzband umfassen.

7. Verfahren nach einem der Ansprüche 1 bis 6,
**dadurch gekennzeichnet,**
**dass** alle Frequenzbänder unterschiedlich groß sind, wobei das jeweils kleinere Frequenzband vollständig innerhalb der jeweils größeren Frequenzbänder angeordnet ist.

8. Verfahren nach Anspruch 7,
**dadurch gekennzeichnet,**
**dass** das kleinste der Frequenzbänder das gemeinsame Frequenzband ist.

9. Verfahren nach Anspruch 7 oder 8,
**dadurch gekennzeichnet,**
**dass** das größte der Frequenzbänder derart gewählt ist, dass dessen spezifisches Signal im Verhältnis zu den anderen spezifischen Messsignalen die kleinste Abhängigkeit von der Struktur der aufgebrachten Beschichtung hat.

10. Verfahren nach Anspruch 9,
**dadurch gekennzeichnet,**
**dass** das spezifische Signal des größten der Frequenzbänder im wesentlichen unabhängig von der Struktur der aufgebrachten Beschichtung ist.

11. Verfahren nach einem der Ansprüche 7 bis 10,
**dadurch gekennzeichnet,**
**dass** das kleinste der Frequenzbänder derart gewählt ist, dass dessen spezifisches Signal im Verhältnis zu den anderen spezifischen Messsignalen die größte Abhängigkeit von der Struktur der aufgebrachten Beschichtung hat.

12. Verfahren nach einem der Ansprüche 7 bis 11,
**dadurch gekennzeichnet,**
**dass** die Frequenzbänder alle eine gemeinsame Mittenfrequenz haben.

13. Verfahren nach einem der Ansprüche 1 bis 12,
**dadurch gekennzeichnet,**
**dass** jedes der spezifischen Messsignale jeweils proportional zum Mittelwert der Intensität der wechselgewirkten Strahlung über das jeweilige Frequenzband sind.

14. Verfahren nach einem der Ansprüche 1 bis 13,
**dadurch gekennzeichnet,**
**dass** die Frequenzbänder mittels Bandpassfiltern ausgewählt werden.

15. Verfahren nach einem der Ansprüche 1 bis 14,
**dadurch gekennzeichnet,**
**dass** die Menge der auf die Materialbahn aufgebrachten Beschichtung kontinuierlich online ermittelt wird.

16. Verfahren nach einem der Ansprüche 1 bis 15,
**dadurch gekennzeichnet,**
**dass** das Verfahren nach einem der vorherigen Ansprüche mit einem anderen Messverfahren im infraroten Wellenlängenbereich kombiniert wird, um bspw. die Feuchte der Materialbahn mit der aufgebrachten Beschichtung zu bestimmen.

17. Verfahren zur Regelung der Menge einer Beschichtung, die auf eine Materialbahn aufgebracht wird mit den Schritten:

   - Bestimmung der Menge der Beschichtung, welche auf einen Abschnitt der Materialbahn durch einen Auftragsschritt aufgebracht wurde, mit einem Verfahren nach einem der Ansprüche 1 bis 16,
   - Vergleich des ermittelten Istwerts der Beschichtungsmenge mit einem Sollwert der Beschichtungsmenge,
   - Betätigen zumindest eines Stellglieds auf Basis des Vergleichs zwischen Soll- und Istwert, zur Beeinflussung der Menge der Beschichtung, die auf einen noch nicht mit dem Auftragsschritt beschichteten Abschnitt der Materialbahn aufgebracht wird.

**18.** Vorrichtung zum Aufbringen einer Beschichtung auf eine bewegte Materialbahn, umfassend ein Auftragswerk mit mindestens einem Stellglied zur Regulierung der Auftragsmenge und mindestens eine Messvorrichtung, die geeignet ist das Verfahren nach einem der Ansprüche 1 bis 16 durchzuführen, wobei die Messvorrichtung in Bahnlaufrichtung hinter dem Auftragswerk angebracht ist, umfassend einem Computer zur Ermittelung der Differenz zwischen Ist- und Sollwert der Beschichtung und Berechnung der Stellsignale für das Auftragswerk.

**19.** Vorrichtung nach Anspruch 17,
**dadurch gekennzeichnet,**
**dass** jeweils eine Messvorrichtung, die geeignet ist das Verfahren nach einem der Ansprüche 1 bis 16 durchzuführen, jeweils vor und hinter dem Auftragswerk angebracht ist, mit einem Computer zur Ermittelung des Differenzsignals der beiden Messvorrichtungen und des daraus resultierenden Ist-Werts für die Beschichtung.

**20.** Vorrichtung nach Anspruch 17 oder 18,
**dadurch gekennzeichnet,**
**dass** die Vorrichtung mehrere Auftragswerke umfasst.

**21.** Vorrichtung nach einem der Ansprüche 17 bis 19,
**dadurch gekennzeichnet,**
**dass** die Messvorrichtung geeignet ist, jeweils die Auftragsmenge auf die Ober- und Unterseite der Materialbahn unabhängig voneinander zu bestimmen.

**Claims**

**1.** Method for determining the amount of coating applied to a web of material, in particular a fibrous web, in which radiation is aimed at the web of material provided with the coating and the radiation interacts at least with the coating, and in which at least a proportion of the radiation interacting at least with the coating is detected in order to determine the amount of coating on and possibly in the web of material on the basis of at least one measured signal produced by the detected radiation,
**characterized in that**
following its interaction, the radiation is detected in various frequency bands in order to produce a measured signal that is specific for each frequency band, the frequency bands comprising at least one frequency that is common to all the frequency bands and the frequency bands being selected in such a way that, given the same amount of applied coating, at least one of the specific measured signals varies more with the structure of the applied coating than another of the specific measured signals, and **in that** the specific measured signals of the various frequency bands are linked mathematically with one another in order to determine the amount of coating.

**2.** Method according to Claim 1,
**characterized in that**
in the case of the common frequency, the radiation is at least partly absorbed during interaction with the coating.

**3.** Method according to Claim 1 or 2,
**characterized in that**
the specific measured signal from each frequency band is produced by a proportion of the radiation that is reflected on account of the interaction.

**4.** Method according to Claim 1 or 2,
**characterized in that**
the specific measured signal from each frequency band is produced by a proportion of the radiation that is transmitted on account of the interaction.

**5.** Method according to one of Claims 1 to 4,
**characterized in that**
the at least one common frequency lies in the infrared spectral range, in particular at a wavelength of about 2500 $cm^{-1}$.

**6.** Method according to one of Claims 1 to 5,
**characterized in that**
the frequency bands comprise a frequency band that is common to all the frequency bands.

**7.** Method according to one of Claims 1 to 6,
**characterized in that**
all the frequency bands are of different sizes, the respectively smaller frequency band being arranged completely within the respectively larger frequency bands.

**8.** Method according to Claim 7,
**characterized in that**
the smallest of the frequency bands is the common frequency band.

**9.** Method according to Claim 7 or 8,
**characterized in that**
the largest of the frequency bands is selected in such a way that its specific signal has the smallest dependence on the structure of the applied coating in relation to the other specific measured signals.

**10.** Method according to Claim 9,
**characterized in that**
the specific signal of the largest of the frequency bands is substantially independent of the structure of the applied coating.

**11.** Method according to one of Claims 7 to 10,

**characterized in that**
the smallest of the frequency bands is selected in such a way that its specific signal has the greatest dependence on the structure of the applied coating in relation to the other specific measured signals.

12. Method according to one of Claims 7 to 11, **characterized in that** the frequency bands all have a common mid-frequency.

13. Method according to one of Claims 1 to 12, **characterized in that** each of the specific measured signals is in each case proportional to the mean value of the intensity of the radiation that has interacted over the respective frequency band.

14. Method according to one of Claims 1 to 13, **characterized in that** the frequency bands are selected by means of bandpass filters.

15. Method according to one of Claims 1 to 14, **characterized in that** the amount of coating applied to the web of material is determined continuously online.

16. Method according to one of Claims 1 to 15, **characterized in that** the method according to one of the preceding claims is combined with another measuring method in the infrared wavelength range, in order for example to determine the moisture content of the web of material with the applied coating.

17. Method for controlling the quantity of a coating which is applied to a web of material, comprising the steps:

- determining the quantity of coating which has been applied to a section of the web of material by an application step, using a method according to one of Claims 1 to 16,
- comparing the determined actual value of the amount of coating with an intended value of the amount of coating,
- actuating at least one actuating element on the basis of the comparison between intended and actual value in order to influence the amount of coating which is applied to a section of the web of material not yet coated by the application step.

18. Apparatus for applying a coating to a moving web of material, comprising an application unit having at least one actuating element for regulating the amount applied and at least one measuring device which is suitable to carry out the method according to one of Claims 1 to 16, the measuring device being fitted after the application unit in the web running direction, comprising a computer for determining the difference between actual and intended value of the coating and calculating the actuating signals for the application unit.

19. Apparatus according to Claim 17, **characterized in that** in each case a measuring device that is suitable to carry out the method according to one of Claims 1 to 16 is fitted in each case before and after the application unit, comprising a computer for determining the differential signal from the two measuring devices and the actual value resulting therefrom for the coating.

20. Apparatus according to Claim 17 or 18, **characterized in that** the apparatus comprises a plurality of application units.

21. Apparatus according to one of Claims 17 to 19, **characterized in that** the measuring device is suitable in each case to determine the amount applied to the top side and underside of the web of material independently of each other.

**Revendications**

1. Procédé pour déterminer la quantité de revêtement appliqué sur une bande de matière, notamment une bande de matière fibreuse, dans lequel le rayonnement est dirigé sur la bande de matière munie du revêtement et le rayonnement interagit au moins avec le revêtement et dans lequel au moins une partie du rayonnement qui interagit au moins avec le revêtement est détectée afin de déterminer la quantité de revêtement sur et éventuellement dans la bande de matière en se basant sur au moins un signal de mesure généré par le rayonnement détecté, **caractérisé en ce que** le rayonnement est détecté après son interaction dans différentes bandes de fréquences pour générer un signal de mesure spécifique à chaque bande de fréquences, les bandes de fréquences comprenant au moins une fréquence commune à toutes les bandes de fréquences et les bandes de fréquences étant choisies de telle sorte qu'avec une même quantité de revêtement appliqué, au moins l'un des signaux de mesure spécifiques varie plus avec la structure du revêtement appliqué qu'un autre des signaux de mesure spécifiques et que les signaux de mesure spécifiques des différentes bandes de fréquences sont combinés mathématiquement entre eux pour déterminer la quantité de revêtement.

**2.** Procédé selon la revendication 1, **caractérisé en ce qu'**à la fréquence commune, le rayonnement est au moins partiellement absorbé lors de l'interaction avec le revêtement.

**3.** Procédé selon la revendication 1 ou 2, **caractérisé en ce que** le signal de mesure spécifique de chaque bande de fréquences est généré par une partie du rayonnement réfléchie en raison de l'interaction.

**4.** Procédé selon la revendication 1 ou 2, **caractérisé en ce que** le signal de mesure spécifique de chaque bande de fréquences est généré par une partie du rayonnement transmise en raison de l'interaction.

**5.** Procédé selon l'une des revendications 1 à 4, **caractérisé en ce qu'**au moins une fréquence commune se trouve dans la plage spectrale des infrarouges, notamment à une longueur d'onde d'environ 2500 cm$^{-1}$.

**6.** Procédé selon l'une des revendications 1 à 5, **caractérisé en ce que** les bandes de fréquences comprennent une bande de fréquence commune à toutes les bandes de fréquences.

**7.** Procédé selon l'une des revendications 1 à 6, **caractérisé en ce que** toutes les bandes de fréquences sont de tailles différentes, la bande de fréquences respectivement la plus petite se trouvant entièrement à l'intérieur de la bande de fréquence respectivement la plus grande.

**8.** Procédé selon la revendication 7, **caractérisé en ce que** la plus petite des bandes de fréquences est la bande de fréquences commune.

**9.** Procédé selon la revendication 7 ou 8, **caractérisé en ce que** la plus grande des bandes de fréquences est sélectionnée de telle sorte que son signal spécifique, en comparaison des autres signaux de mesure spécifiques, présente la plus petite dépendance à la structure du revêtement appliqué.

**10.** Procédé selon la revendication 9, **caractérisé en ce que** le signal spécifique de la plus grande des bandes de fréquences est pour l'essentiel indépendant de la structure du revêtement appliqué.

**11.** Procédé selon l'une des revendications 7 à 10, **caractérisé en ce que** la plus petite des bandes de fréquences est sélectionnée de telle sorte que son signal spécifique, en comparaison des autres signaux de mesure spécifiques, présente la plus grande dépendance à la structure du revêtement appliqué.

**12.** Procédé selon l'une des revendications 7 à 11, **ca-**ractérisé en ce que les bandes de fréquences possèdent toutes une fréquence centrale commune.

**13.** Procédé selon l'une des revendications 1 à 12, **caractérisé en ce que** chacun des signaux de mesure spécifiques est à chaque fois proportionnel à la valeur moyenne de l'intensité du rayonnement résultant de l'interactivité sur la bande de fréquences correspondante.

**14.** Procédé selon l'une des revendications 1 à 13, **caractérisé en ce que** les bandes de fréquences sont sélectionnées au moyen de filtres passe-bande.

**15.** Procédé selon l'une des revendications 1 à 14, **caractérisé en ce que** la quantité de revêtement appliqué sur la bande de matière est déterminée continuellement en direct.

**16.** Procédé selon l'une des revendications 1 à 15, **caractérisé en ce que** le procédé selon l'une des revendications précédentes est combiné avec un autre procédé de mesure dans la plage des longueurs d'onde de l'infrarouge afin de déterminer, par exemple, l'humidité de la bande de matière avec le revêtement appliqué.

**17.** Procédé pour réguler la quantité d'un revêtement qui est appliqué sur une bande de matière, comprenant les étapes suivantes :

- Détermination, avec un procédé selon l'une des revendications 1 à 16, de la quantité de revêtement qui a été appliqué sur une portion de la bande de matière par une opération d'application,
- Comparaison de la valeur réelle déterminée de la quantité de revêtement avec une valeur de consigne de la quantité de revêtement,
- Actionnement d'au moins un élément de commande sur la base de la comparaison entre la valeur réelle et la valeur de consigne pour influencer la quantité de revêtement qui a été appliqué sur une portion de la bande de matière qui n'a pas encore été enduite par l'opération d'application.

**18.** Dispositif pour appliquer un revêtement sur une bande de matière en mouvement, comprenant un mécanisme d'application muni d'au moins un élément de commande pour réguler la quantité appliquée et au moins un dispositif de mesure qui est conçu pour mettre en oeuvre le procédé selon l'une des revendications 1 à 16, le dispositif de mesure étant monté derrière le mécanisme d'application dans le sens de défilement de la bande, comprenant un ordinateur pour déterminer la différence entre la valeur réelle et la valeur de consigne du revêtement et calculer les signaux de commande pour le mécanisme d'application.

19. Dispositif selon la revendication 17, **caractérisé en ce que** respectivement un dispositif de mesure conçu pour mettre en oeuvre le procédé selon l'une des revendications 1 à 16 est à chaque fois disposé devant et derrière le mécanisme d'application, ayant un ordinateur pour déterminer le signal différentiel des deux dispositifs de mesure et la valeur réelle qui en résulte pour le revêtement.

20. Dispositif selon la revendication 17 ou 18, **caractérisé en ce que** le dispositif comprend plusieurs mécanismes d'application.

21. Dispositif selon l'une des revendications 17 à 19, **caractérisé en ce que** le dispositif de mesure est conçu pour déterminer indépendamment l'une de l'autre les quantités respectivement appliquées sur le dessus et sur le dessous de la bande de matière.

Fig.1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0882945 A